**Europäisches Patentamt**

**European Patent Office**

**Office européen des brevets**

(11) Publication number : **0 637 027 A2**

(12) # EUROPEAN PATENT APPLICATION

(21) Application number : **94305571.5**

(22) Date of filing : **25.07.94**

(51) Int. Cl.⁶ : **G11B 27/28,** G11B 27/031, H04N 5/14

(30) Priority : **29.07.93 US 99113**

(43) Date of publication of application :
**01.02.95 Bulletin 95/05**

(84) Designated Contracting States :
**DE FR GB IT NL**

(71) Applicant : **Hewlett-Packard Company**
**3000 Hanover Street**
**Palo Alto, California 94304 (US)**

(72) Inventor : **Medina-Puri, Monica**
**34304 Portia Terrace**
**Fremont, CA 94555 (US)**

(74) Representative : **Williams, John Francis et al**
**WILLIAMS, POWELL & ASSOCIATES**
**34 Tavistock Street**
**London WC2E 7PB (GB)**

(54) **Detecting scene cuts in video processing.**

(57)    A method for detecting scene cuts in a motion picture, which comprises a plurality of frames in a sequential order. The preferred embodiment of the present invention utilizes the correlation between successive frames to detect abrupt cuts. Gradual cuts are preferably detected by examining a function consisting of the standard deviation of the pixels of each frame as a function of the frame number.

The present invention relates to video processing and more particularly, to an improved method for automatically detecting the start of a new scene in a video sequence.

A typical motion picture consists of a sequence of scenes. Within a scene, each frame differs only slightly from the preceding frame. The change from one scene to the next will be referred to as "cut" in the following discussion. Scene cuts may be abrupt or gradual. Gradual scene cuts are associated with special effects such as camera pans, dissolves, fades to black or fade from black.

One method for summarizing a motion picture is to provide a log of the scenes. A scene log is a list of the scenes and the location of the start of the scene from some reference point such as the start of the motion picture. A typical frame from the scene may be used to summarize the scene.

Among other things, such logs are useful in video editing. The log provides a means for an editor to quickly find a particular scene.

Prior art schemes for automating the logging of motion pictures rely on the difference between sequential frames to determine where a cut has occurred. These methods compute the average value of some parameter such as the absolute value of the difference of corresponding pixels in two sequential frames. Such methods do not detect gradual cuts with sufficient reliability to be useful in automating the cut logging process. In addition, there are some situations in which even abrupt cuts are not detected by these methods.

Broadly, it is the object of the present invention to provide an improved method for detecting scene cuts.

It is a further object of the present invention to provide an automated method for detecting both gradual scene and abrupt cuts.

Accordingly, the invention proposes a method for detecting scene cuts in a motion picture, said motion picture comprising an ordered sequence of frames, each said frame comprising a plurality of intensity values, said method comprising the steps of determining a correlation value of each frame with a corresponding previous frame, said previous frame being separated in said sequence by a predetermined number of frames; comparing said correlation value with a threshold value; and reporting an abrupt scene change if said correlation value is less than said threshold value.

The preferred embodiment of the present invention utilizes the correlation between successive frames to detect abrupt cuts. Gradual cuts are preferably detected by examining a function consisting of the standard deviation of the pixels of each frame as a function of the frame number. Gradual cuts are characterized by excursions in this function. A gradual scene cut may either manifest itself by a peak in this function or by a ramp connecting two regions of relatively constant values.

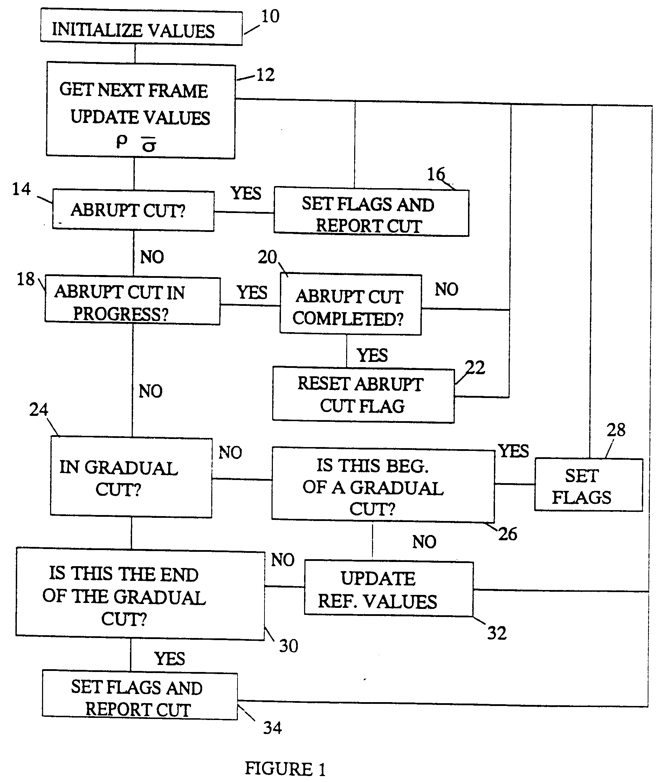

Figure 1 is a flow chart of an exemplary method to the present invention for finding the cuts in a motion picture.

The present embodiment utilizes the correlation of the pixels in successive frames to detect abrupt scene cuts. The method by which more gradual scene cuts are detected will be explained in more detail below. Denote the pixels of the nth frame of a motion picture by $^nI(x,y)$. That is $^nI(x,y)$ is the intensity of the pixel at some point $(x,y)$ in the frame. For the purposes of this discussion, it will be assumed that $^nI(x,y)$ is defined on a regular grid having a total of N grid points. For two frames, $(n-k)$ and $n$, the method of the present invention computes a correlation factor, $\rho_{n,k}$, where

$$\rho_{n,k} = \frac{E[^{(n-k)}I(x,y) * {^n}I(x,y)] - E[^{(n-k)}I(x,y)] * E[^nI(x,y)]}{\sigma_n * \sigma_{(n-1)}} \quad (1)$$

where

$$E[(^nI(x,y)] = \frac{1}{N}\sum_x\sum_y {}^nI(x,y) \quad (2)$$

and

$$\sigma_n = \sqrt{E[^nI^2(x,y)] - E^2[^nI(x,y)]} \quad (3)$$

In the preferred embodiment of the present invention, $k=1$. Within any given scene, $\rho_{n,1}$ is expected to be near one. If an abrupt scene cut occurs at frame n, then $\rho_{n,1}$ decrease to near zero. The present invention tracks the value of $\rho_{n,1}$ from frame to frame and defines an abrupt scene cut as having occurred at frame n if $\rho_{n,1}$ is below some predetermined value.

In practice, the threshold value may be found by examining a few scene changes. However, it will be apparent to those skilled in the art that fixed thresholds may be used. The cut-off can also be defined in terms of the previously observed values of $\rho_{n,1}$. In such a system, an abrupt scene cut would be defined to have occurred at frame n if $\rho_{n,1}$ is less than the average value of $\rho_{n,1}$ over the previous M frames where M is some integer greater than 0.

While the above method finds abrupt scene cuts with a high degree of reliability, it is not a reliable method for finding gradual scene cuts, since the amount of change between successive frames in a gradual cut is too small to substantially change the value of $\rho_{n,1}$. In principle, the method discussed above can be extended to find gradual scene cuts by increasing the "distance" between the frames for which $P_{n,k}$ is computed, i.e., choosing k>1. In such a system, abrupt cuts would be detected using $\rho_{n,1}$, and gradual cuts would be detected using $\rho_{n,k}$ with k set to some predetermined value. While such a scheme is capable of detecting more of the gradual cuts, it requires some knowledge of the correct value for k. In addition, further analysis is needed to determine the precise location of the cut.

In the preferred embodiment of the present invention, an alternative method is used to detect gradual cuts. As discussed above, the computation of $\rho_{n,k}$ requires the computation of $\sigma_n$. The preferred embodiment of the present invention uses the behavior of $\sigma_n$ to detect gradual scene cuts. The value of $\sigma_n$ for any frame measures the variation of the pixel values about the mean pixel value in the frame. Within any given scene, the values of $\sigma_n$ from frame to frame remain roughly constant. When a scene slowly changes, the value $\sigma_n$ changes from the value representative of the previous scene to the value representative of the new scene. This change takes place over a number of frames.

The specific manner in which $\sigma_n$ changes will depend on the starting and ending scene, and the nature of the special effect. For example, in the case of a fade to black followed by a fade from black to the new scene, $\sigma_n$ would be expected to decrease during the fade to black and then increase to the value representative of the new frame. In practice, the $\sigma_n$ curve has considerably more noise than the $\rho_{n,k}$ curve; hence, the curve is smoothed in the preferred embodiment of the present invention to allow automated determination of the gradual cuts. In the preferred embodiment of the present invention, the previous 4 points are averaged to generate the smoothed version of $\sigma_n$.

The excursions of the $\sigma_n$ curve during a gradual scene cut are of two possible types. In the first type, the $\sigma_n$ curve goes through a peak. This is similar to the fade to black effect discussed above. In the second type, the $\sigma_n$ curve exhibits a "ramp" connecting the two regions of fairly constant $\sigma_n$ values.

A gradual cut is defined as having begun when the absolute value of the slope of the smoothed $\sigma_n$ curve increases beyond a predetermined threshold value. The increased slope value must be present for a predetermined first time interval, i.e., number of frames, before the gradual cut is regarded as valid. When the absolute value of the slope has remained below a predetermined threshold for a second time interval, the gradual cut is deemed to have been completed. Between the beginning and end of the gradual cut, the slope of the $\sigma_n$ curve will, in general, go to zero briefly as the $\sigma_n$ curve passes through an inflection point if a peak is present; hence, the gradual cut is not defined to have been completed until the absolute value of the slope of the $\sigma_n$ curve remains below the threshold for some predetermined time interval.

Refer now to Figure 1 which is a flow chart of a scene eut detecting program according to the present invention. In the preferred embodiment of the present invention, the value of k in Eq. (1) is set to one. To simplify the notation, $\rho_{n,1}$ has been replaced by $\rho$ in the following discussion. After initializing various variables as shown at 10, the program acquires the next frame of the motion picture and computes the values for $\rho$ and the average value of $\sigma$ as shown at 12. The program then tests the value of $\rho$ to determine if an abrupt cut has occurred as shown at 14. An abrupt cut is deemed to have occurred if the value of $\rho$ is less than a predetermined threshold. It is possible for an abrupt cut to take more than one frame. Hence, a flag is set as shown at 16 to indicate that $\rho$ has crossed the threshold. The flag will be reset when $\rho$ once again returns to a value above the threshold. This flag is used by blocks 18 and 20 to determine if the current value of $\rho$ being less than the threshold is a new cut or just a continuation of the previously detected abrupt cut. If the cut is completed, the flag is reset as shown at 22.

If no abrupt cut is in progress, the program goes on to examine the data to determine if a gradual cut is in progress. As noted above, the program uses the average value of $\sigma$ to detect gradual cuts. The curve consisting of the average value of $\sigma$ as a function of the frame number will be referred to as the $\sigma$ curve. The program also keeps track of the slope of the $\sigma$ curve. Changes in the slope of the $\sigma$ curve are used to detect possible events in traversing a gradual cut. As noted above, a gradual cut may be evidenced either by a peak in the $\sigma$ curve or by a ramp connecting two $\sigma$ values representative of $\sigma$ in the frames on each side of the gradual cut. In the later case, there will be no change in the sign of the slope of the $\sigma$ curve during the gradual cut.

Referring again to Figure 1, if no abrupt cut is in progress, the program tests for a gradual cut being in progress as shown at 24. If a gradual cut is not in progress, the program checks for the beginning of a gradual cut as shown at 26. A gradual cut is deemed to have begun if the slope of the $\sigma$ curve has changed and the change in $\sigma$ is greater than a predetermined threshold value. If these conditions are met, a set of flags is initialized as shown at 28. The flag values indicate that a gradual cut has begun and no peak has yet been detected in the $\sigma$ curve.

If a gradual cut was already in progress as indicated by the flags set at 28, the program determines if the current frame is the end of the gradual cut as shown at 30. If the sign of the slope of the σ curve has changed, the program checks to see if the program has already passed through an inflection point as indicated by one of the above-described flags having a value different from its initialization value. If the initial value is still present, the program assumes that the change in sign is due to the presence of an inflection point in the σ curve. The flag is set accordingly as shown at 32. If the σ curve has already passed through an inflection point, the program assumes that the gradual cut has been completed.

If the sign of the slope of the σ curve has not changed but the change in the σ curve from the last frame is less than some predetermined threshold, the program assumes that the gradual cut has been completed, provided the excursions in the σ curve from one scene to the next were sufficiently large. This case is encountered when there is no peak in the σ curve between the scenes.

The σ curve, even with smoothing, has a significant amount of noise. To distinguish a "ramp" between two values in the σ curve from noise, the program keeps track of certain reference values on the σ curve. The value of the σ curve at the potential beginning of a ramp is stored. At the end of the ramp, the difference between the ending value and the reference values is used to eliminate "noise events".

While the preferred embodiment of the present invention uses the standard deviation of the pixel values in each frame for detecting gradual cuts, it will be apparent to those skilled in the art that other statistical measures or functions thereof may be used. In this regard, it should be noted that σ is a function of the variance of the pixel values which in turn is the average value of the second moment of the pixel values. Hence, any function based on one of the moments of the pixel distribution may also be utilized.

While the above-described embodiments of the present invention compute the correlation and standard deviation using all of the data in each frame, it will be apparent to those skilled in the art that a subset of the pixel values may be used to determine these parameters. Any representative subset may be used. Embodiments based on such subsets generate a lower computational load; however, such embodiments are expected to yield σ values having more "noise".

The present invention is preferably practiced on a general purpose computer. However, it will be apparent to those skilled in the art that special purpose hardware may also be utilized to improve the speed with which the method operates. For example, hardware that computes the correlation of two frames and the variance of the pixels in a given frame can substantially improve the speed with which the method of the present invention operates.

## Claims

1. A method for detecting scene cuts in a motion picture, said motion picture comprising an ordered sequence of frames, each said frame comprising a plurality of intensity values, said method comprising the steps of determining a correlation value of each frame with a corresponding previous frame, said previous frame being separated in said sequence by a predetermined number of frames; comparing said correlation value with a threshold value; and reporting an abrupt scene change if said correlation value is less than said threshold value.

2. The method of Claim 1 wherein said predetermined number of frames is equal to one.

3. The method of Claim 1 further comprising the steps of
    determining a statistical measure for each said frame; and
    detecting changes in the value of said statistical measure as a function of the frame number and;
    reporting a gradual scene change if said detected changes match a predetermined pattern.

4. The method of Claim 3 wherein said statistical measure is a function of the variance of said intensity values.

5. The method of Claim 3 wherein said statistical measure is a moment of said intensity values.

6. The method of Claim 3 wherein said predetermined pattern is a peak in said statistical measure as a function of the frame number.

7. The method of Claim 3 wherein said predetermined pattern is a ramp connecting two regions in said function, said regions of a variation of said statistical measure less than the difference in said statistical measure between the beginning and end of said ramp.

FIGURE 1